# EUROPEAN PATENT SPECIFICATION

(11) **EP 3 581 402 B1**
(45) Date of publication and mention of the grant of the patent: **03.03.2021**
(21) Application number: 19178691.2
(22) Date of filing: 06.06.2019
(51) Int. Cl.: B60C 11/04, B60C 11/12, B60C 11/03

(54) **MULTIPLANE INTERLOCKING STRUCTURE FOR A TREAD OF A TIRE**
MEHRSCHICHTIGE INEINANDERGREIFENDE STRUKTUR FÜR EINE LAUFFLÄCHE EINES REIFENS
STRUCTURE D'INTERVERROUILLAGE MULTIPLANS POUR UNE BANDE DE ROULEMENT D'UN PNEUMATIQUE

(30) Priority: 13.06.2018 US 201816007148
(43) Date of publication of application: 18.12.2019
(73) Proprietor: The Goodyear Tire & Rubber Company, Akron, OH 44316 (US)
(72) Inventor: DIXON, Max Harold, Kent, OH 44240 (US); ASKARIAN, Samin, Irvine, CA 92620 (US); LAZERATION, Joel Joseph, Copley, OH 44321 (US); SALIGRAMA KARIDEVAIAH, Padmarajaiah, Copley, OH 44321 (US); LLOYD, Tosh Michael, Canton, OH 44709 (US); BANI HANI, Ahmad Shafiq, Peninsula, OH 44264 (US)
(74) Representative: Kutsch, Bernd

(56) References cited:
- EP-A1- 2 857 225
- DE-A1-102013 221 565
- US-A1- 2015 053 320
- US-A1- 2017 066 290

## Description

### Field of Invention

The present invention relates to a tire, and more specifically, to a tread for a tire.

### Background of the Invention

A construction may be adopted in conventional pneumatic tires in which, when a cross-section is viewed from a tire meridian direction, a contact patch of a shoulder rib arches and forms a convex on an inner side of a tire radial direction. Due to this construction, contact pressure of the tire may be distributed evenly over a center region and a shoulder region of a tread portion and uneven wear of the tire may be suppressed.

US 2017/066290 A1 describes a tire tread in accordance with the preamble of claim 1.

US 2015/053320 A1, EP 2 857 225 A1 and DE 10 2013 221565 describe tire treads with sipes extending in a zigzag manner axially and radially.

### Summary of the Invention

The invention relates to a tire tread in accordance with claim 1 and to a tire in accordance with claim 15.

Dependent claims refer to preferred embodiments of the invention.

A tread for a tire, in accordance with the present invention, includes a plurality of circumferential ribs, at least one of the ribs having sipes extending in a zigzag manner as the sipes extend axially across the rib and also extending in a zigzag manner as the sipes project radially inward from a radially outer surface of the rib.

According to another aspect of the tread, the sipes further include a curved, cylindrical radially innermost surfaces to mitigate cracking and to increase circumferential flexibility of the tread.

According to still another aspect of the tread, the plurality of ribs further includes a first circumferential central rib, a second circumferential intermediate rib, a third circumferential intermediate rib, a fourth circumferential shoulder rib and a fifth circumferential shoulder rib.

According to yet another aspect of the tread, only the fourth and fifth ribs have the sipes.

According to still another aspect of the tread, only the first rib has the sipes.

According to yet another aspect of the tread, only the second and third ribs have the sipes.

According to still another aspect of the tread, only the first and fifth ribs have the sipes.

According to yet another aspect of the tread, each of the first, second, third, fourth, and fifth ribs have the sipes.

According to still another aspect of the tread, only the first and second ribs haves the sipes.

According to yet another aspect of the tread, sipes of the fourth and fifth ribs terminate in notches.

A first tire in accordance with the present invention includes a tread having a plurality of circumferential ribs, at least one of the ribs having sipes extending in a zigzag manner in both axial and radial directions of the tire.

According to another aspect of the first tire, the sipes further include a curved, cylindrical radially innermost surfaces to mitigate cracking and to increase circumferential flexibility of the tread.

According to yet another aspect of the first tire, the plurality of ribs further includes a first circumferential central rib, a second circumferential intermediate rib and a third circumferential shoulder rib.

According to still another aspect of the first tire, only the first and second ribs have the sipes.

According to yet another aspect of the first tire, only the first rib has the sipes.

According to still another aspect of the first tire, only the second and third ribs have the sipes.

According to yet another aspect of the first tire, only the first and third ribs have the sipes.

According to still another aspect of the first tire, each of the first, second, and third ribs have the sipes.

A second tire in accordance with the present invention includes a tread having a plurality of circumferential ribs, each of the ribs having doubly corrugated sipes extending in a zigzag manner in both axial and radial directions of the tire.

According to another aspect of the second tire, the sipes further include a cylindrical, radially innermost surface.

### Definitions

"Axial" and "axially" refer to lines or directions that are parallel to the axis of rotation of the tire.

"Circumferential" and "circumferentially" mean lines or directions extending along the perimeter of the surface of the annular tire parallel to the equatorial plane (EP) and perpendicular to the axial direction.

"Equatorial plane (EP)" means the plane perpendicular to the tire's axis of rotation and passing through the center of its tread; or the plane containing the circumferential centerline of the tread.

"Groove" means an elongated void area in a tread that may extend circumferentially or laterally about the tread in a straight, curved, or zigzag manner. Circumferentially and laterally extending grooves sometimes have common portions. The "groove width" is the tread surface occupied by a groove or groove portion divided by the length of such groove or groove portion; thus, the groove width may be its average width over its length. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves, which they interconnect, they may be regarded as forming "tie bars" tending to maintain a rib-like character in the tread region involved. As used herein, a groove is intended to have a width large enough to remain open in the tires contact patch or footprint.

"Radial" and "radially" mean directions radially toward or away from the axis of rotation of the tire.

### Brief Description of the Drawings

The present invention will be better understood through reference to the following description and the appended drawings, in which:
FIG. 1 is a schematic orthogonal view of a tire in accordance with the present invention.
FIG. 2 is a schematic detailed orthogonal view of the tread of the tire of FIG. 1.
FIG. 3 is a schematic perspective view of part of the tread of FIG. 2.
FIG. 4 is a schematic perspective view of a blade structure for forming part of the tread of FIGS. 1 through 3.
FIG. 5 is a schematic section view taken along line 5-5 in FIG. 3.
FIG. 6 is a schematic section view taken along line 6-6 in FIG. 3.

### Detailed Description of Example Embodiments of the Invention

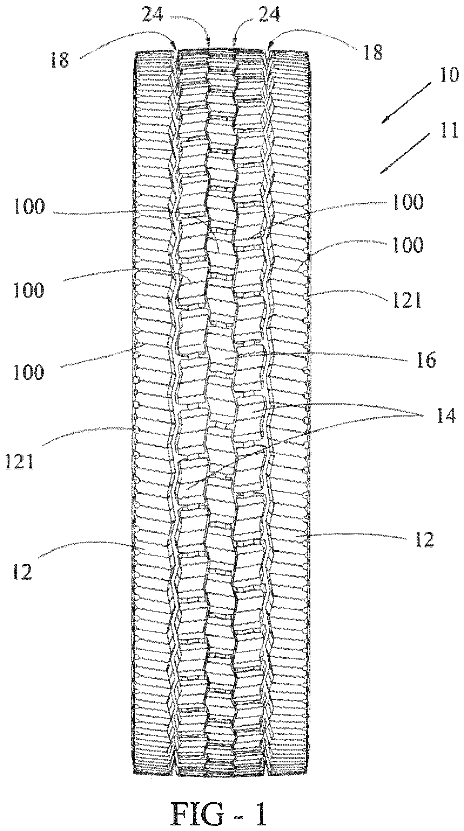

A pneumatic, or non-pneumatic, tire 10 is illustrated in FIGS. 1 through 3 and has a tread 11. The tread 11 has a center circumferential rib 16, two intermediate circumferential ribs 14, and two shoulder ribs 12. These five ribs 12, 14, 16 are defined by two shoulder grooves 18 and two central circumferential grooves 24.

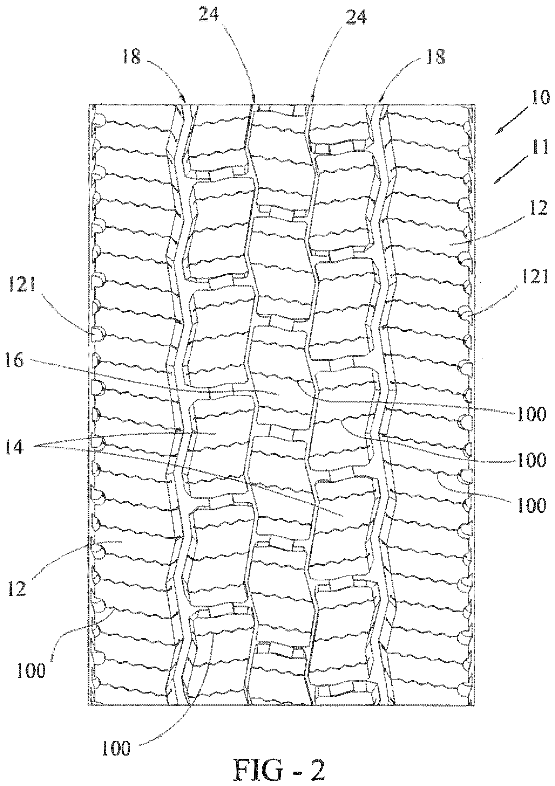

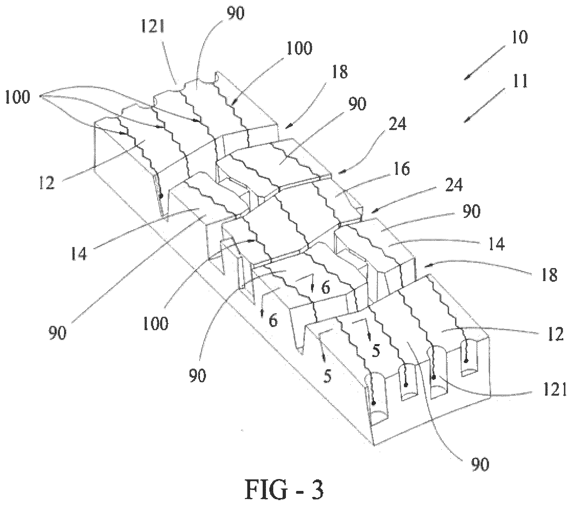

The two central circumferential grooves 24 each have a jagged, or zigzag, cross-section with radially vertical walls and a flat bottom (FIGS. 2 and 3). The two shoulder grooves 18 are axially wider than the central circumferential grooves 24 and each have a jagged, or zigzag, cross-section with slanted walls and a flat bottom (FIGS. 2 and 3). This design of the grooves 24, 18 helps to improve stiffness of the tire tread 11 and to reduce irregular wear and stress across the tread 11.

At least one, several or all of the ribs 12, 14, 16 have laterally and circumferentially extending sipes 100. Preferably, the sipes 100 in at least one, several of all of the ribs 12, 14, 16 are inclined or slanted in top view onto the tread versus the axial direction making an angle with the axial direction in a range of from - 20° to +20°. Preferably, the sipes 100 in one of the ribs are inclined in an opposite direction versus the axial direction than the sipes 100 in the adjacent rib or ribs, making for instance in case of five ribs 12, 14, 16 and starting with a shoulder rib 12 angles of -10°/+10°/-10°/+10°/-10° or of +10°/-10°/+10°/-10°/+10°, or angles of +15°/- 10°/+10°/-10°/+15° or -15°/+10°/-10°/+10°/-15°. Depending on the number of ribs, the angles may be each independently selected from a range of from -20° to +20°.

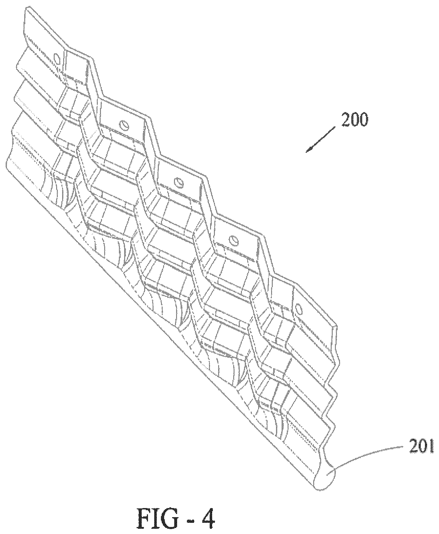

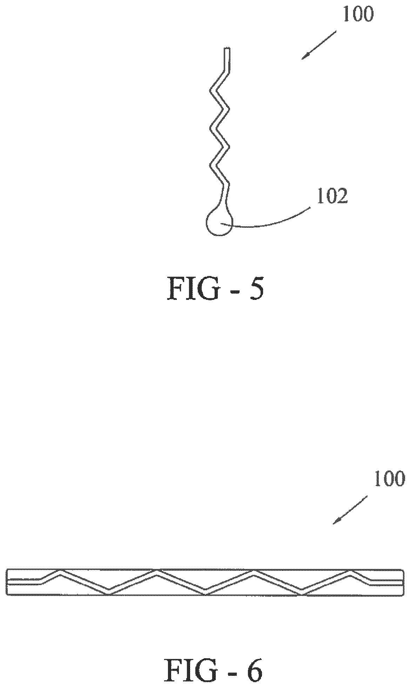

Each of the sipes 100 extends in a zigzag manner both as the sipes extend axially across the ribs (FIG. 6) and radially inward from the tread surface (FIG. 5). Preferably, each of the sipes 100 extends axially fully across the respective rib 12, 14, 16. The axially extending zigzag pattern of a given sipe 100 (visible in top view on the tread 11) preferably comprises from 2 to 6, more preferably 3 to 5, peaks in the axial zigzag pattern and from 1 to 7, more preferably to 2 to 5, valleys in the axial zigzag pattern (knowing that peaks and valleys alternate and that the terms "peak" and "valley" may be used interchangeably when changing axial viewing direction). Preferably, each of the sipes 100 extends in the radial direction from the radially outermost surface of the tread 11 to a radial depth corresponding to 70 to 110 percent, more preferably 90 to 105 percent or 100 percent, of the maximum radial depth of the circumferential grooves 18, 24 or of the non-skid depth of the tread 11. The radially extending zigzag pattern of a given sipe 100 (visible when cutting the tread 11 along the equatorial plane of the tire 10 or parallel to this plane through a respective rib 12, 14, 16, see also FIG. 4) preferably comprises from 2 to 5, more preferably 2 or 3, peaks in the radial zigzag pattern and accordingly from 1 to 6, more preferably 2 or 3, valleys in the radial zigzag pattern (knowing that peaks and valleys alternate and that the terms "peak" and "valley" may be used interchangeably when changing radial viewing direction).

The multiplanar sipes 100 preferably have a curved, cylindrical or rain drop shaped radially innermost end or surface to mitigate cracking and to increase circumferential flexibility of the tread 11 (FIGS. 5 and 6). FIG. 4 shows an example blade 200 for molding/shaping one of the sipes 100. The blade 200 demonstrates how the varying zigzag surfaces blend into each other, as well as a corresponding radially innermost cylindrical or rain drop shaped protrusion 201 for forming the surfaces of the sipes 100.

The "double corrugation" or multiplanar configuration created by the zigzag directions in two planes (axially and radially) of the sipes 100 of the present invention creates a locking effect of the side surfaces 103 of the sipes thereby improving stiffness of associated blocks 90 of the ribs 12, 14, 16. This helps to reduce irregular wear and to reduce stress at the radially innermost bottom surfaces of the sipes 100.

As shown in FIGS. 1 through 3, the sipes 100 of the shoulder ribs 12 preferably terminate at radial notches 121 in outer lateral surfaces of the tread 11.

## Claims

1. A tread for a tire (10) comprising, the tread (11) having a center circumferential rib (16), two intermediate circumferential ribs (14), and two shoulder ribs (12), wherein these five ribs (12, 14, 16) are defined by two shoulder grooves (18) and two central circumferential grooves (24), wherein at least one, several or all of said ribs (12, 14, 16) have sipes (100) extending in a zigzag manner as the sipes (100) extend axially across the respective rib (12, 14, 16) and also extending in a zigzag manner as the sipes (100) extend radially inward from a radially outer surface of the respective rib (12, 14, 16), **characterized in that** the two central circumferential grooves (24) each have a jagged or zigzag cross-section with radially vertical walls and a flat bottom, and **in that** the two shoulder grooves (18) are axially wider than the two central circumferential grooves (24) and each have a jagged or zigzag cross-section with slanted walls and a flat bottom.

2. The tread as set forth in claim 1 wherein the sipes (100) further include a curved, cylindrical or rain drop shaped radially innermost part (201) or surface.

3. The tread as set forth in claim 1 or 2 wherein the plurality of ribs (12, 14, 16) includes a first, circumferential central rib (16), a second, circumferential intermediate rib (14), a third, circumferential intermediate rib (14), a fourth, circumferential shoulder rib (12) and a fifth circumferential shoulder rib (12).

4. The tread as set forth in claim 3 wherein only the fourth and fifth ribs (12) have the sipes (100) or wherein only the first rib (16) has the sipes (100).

5. The tread as set forth in claim 3 wherein only the second and third ribs (14) have the sipes (100).

6. The tread as set forth in claim 3 wherein only the first and fifth ribs (16, 12) or only the first, fourth and fifth ribs (16, 12) have the sipes (100).

7. The tread as set forth in claim 3 wherein each of the first, second, third, fourth and fifth ribs (16, 14, 12) have the sipes (100).

8. The tread as set forth in claim 3 wherein only the first and second ribs (16, 14) or only the first, second and third ribs (16, 14) have the sipes (100).

9. The tread as set forth in at least one of the claims wherein sipes (100) of the fourth and fifth ribs (12) terminate in notches (121) or the sipes (100) in shoulder ribs of the tread (11) terminate in notches (121).

10. The tread as set forth in at least one of the claims wherein the sipes (100) in at least one, several of all of the ribs (12, 14, 16) are inclined or slanted in top view onto the tread versus the axial direction preferably making an angle with the axial direction in a range of from -20° to +20°.

11. The tread of claim 10 wherein the sipes (100) in one of the ribs (12, 14, 16) are inclined in an opposite direction versus the axial direction than the sipes (100) in the adjacent rib or ribs (12, 14, 16).

12. The tread as set forth in at least one of the claims wherein each of the sipes (100) extends axially fully across the respective rib (12, 14, 16).

13. The tread as set forth in at least one of the claims wherein the axially extending zigzag pattern of a sipe (100) comprises from 2 to 6, preferably 3 to 5, peaks in the axial zigzag pattern and from 1 to 7, more preferably to 2 to 5, valleys in the axial zigzag pattern; and/or wherein the radially extending zigzag pattern of a sipe (100) comprises from 2 to 5, preferably 2 or 3, peaks in the radial zigzag pattern and from 1 to 6, preferably 2 or 3, valleys in the radial zigzag pattern.

14. The tread as set forth in at least one of the claims wherein the sipes (100) extend in the radial direction from the radially outermost surface of the tread (11) to a radial depth corresponding to 70 to 110 percent, more preferably 90 to 105 percent or 100 percent, of the non-skid depth or the maximum radial depth of the circumferential grooves (18, 24).

15. A tire, preferably a pneumatic tire (10), having a tread (11) in accordance with at least one of the previous claims.

## Patentansprüche

1. Lauffläche für einen Reifen (10), umfassend die Lauffläche (11), die eine Mittelumfangsrippe (16), zwei Zwischenumfangsrippen (14), und zwei Schulterrippen (12) aufweist, wobei diese fünf Rippen (12, 14, 16) durch zwei Schulterrillen (18) und zwei Mittelumfangsrillen (24) definiert werden, wobei wenigstens eine, mehrere oder alle der Rippen (12, 14, 16) Lamellen (100) aufweisen, die sich zickzackartig erstrecken, wenn die Lamellen (100) sich axial über die jeweilige Rippe (12, 14, 16) hinweg erstrecken, und sich ebenso zickzackartig erstrecken, wenn die Lamellen (100) sich von einer radialen Außenoberfläche der jeweiligen Rippe (12, 14, 16) radial nach innen erstrecken, **dadurch gekennzeichnet, dass** die zwei Mittelumfangsrillen (24) jeweils einen gezackten oder zickzackförmigen Querschnitt mit radial vertikalen Wänden und einer flachen Unterseite aufweisen, und dadurch, dass die beiden Schulterrillen (18) axial breiter sind als die beiden Mittelumfangsrillen (24) und jede einen gezackten oder zickzackförmigen Querschnitt mit schrägen Wänden und einer flachen Unterseite aufweist.

2. Lauffläche nach Anspruch 1, wobei die Lamellen (100) ferner eine(n) gekrümmte(n), zylindrische(n) oder regentropfenförmige(n) radial innerste(n) Teil (201) oder Oberfläche beinhalten.

3. Lauffläche nach Anspruch 1 oder 2, wobei die mehreren Rippen (12, 14, 16) eine erste Umfangsmittelrippe (16), eine zweite Umfangszwischenrippe (14), eine dritte Umfangszwischenrippe (14), eine vierte Umfangsschulterrippe (12) und eine fünfte Umfangsschulterrippe (12) beinhalten.

4. Lauffläche nach Anspruch 3, wobei nur die vierte und die fünfte Rippe (12) die Lamellen (100) aufweisen oder wobei nur die erste Rippe (16) die Lamellen (100) aufweist.

5. Lauffläche nach Anspruch 3, wobei nur die zweite und die dritte Rippe (14) die Lamellen (100) aufweisen.

6. Lauffläche nach Anspruch 3, wobei nur die erste und die fünfte Rippe (16, 12) oder nur die erste, die vierte und die fünfte Rippe (16, 12) die Lamellen (100) aufweisen.

7. Lauffläche nach Anspruch 3, wobei jede der ersten, der zweiten, der dritten, der vierten und der fünften Rippen (16, 14, 12) die Lamellen (100) aufweist.

8. Lauffläche nach Anspruch 3, wobei nur die erste und die zweite Rippe (16, 14) oder nur die erste, die zweite und die dritte Rippe (16, 14) die Lamellen (100) aufweisen.

9. Lauffläche nach wenigstens einem der Ansprüche, wobei die Lamellen (100) der vierten und der fünften Rippe (12) in Kerben (121) enden oder die Lamellen (100) in Schulterrippen der Lauffläche (11) in Kerben (121) enden.

10. Lauffläche nach wenigstens einem der Ansprüche, wobei die Lamellen (100) in wenigstens einer, mehreren oder allen der Rippen (12, 14, 16) in Draufsicht auf die Lauffläche gegenüber der axialen Richtung geneigt oder schräg sind, bevorzugt wodurch ein Winkel mit der axialen Richtung in einem Bereich von -20° bis +20° gebildet wird.

11. Lauffläche nach Anspruch 10, wobei die Lamellen (100) in einer der Rippen (12, 14, 16) gegenüber der axialen Richtung in einer entgegengesetzten Richtung zu den Lamellen (100) in der angrenzenden Rippe oder den angrenzenden Rippen (12, 14, 16) geneigt sind.

12. Lauffläche nach wenigstens einem der Ansprüche, wobei sich jede der Lamellen (100) axial vollständig über die jeweilige Rippe (12, 14, 16) hinweg erstreckt.

13. Lauffläche nach wenigstens einem der Ansprüche, wobei das sich axial erstreckende Zickzackmuster einer Lamelle (100) von 2 bis 6, bevorzugt 3 bis 5, Erhebungen in dem axialen Zickzackmuster und von 1 bis 7, bevorzugt bis 2 bis 5, Täler in dem axialen Zickzackmuster umfasst; und/oder
wobei das sich radial erstreckende Zickzackmuster einer Lamelle (100) 2 bis 5, bevorzugt 2 oder 3, Erhebungen in dem radialen Zickzackmuster und 1 bis 6, bevorzugt 2 oder 3, Täler in dem radialen Zickzackmuster umfasst.

14. Lauffläche nach wenigstens einem der Ansprüche, wobei sich die Lamellen (100) in der radialen Richtung von der radial äußersten Oberfläche der Lauffläche (11) bis zu einer radialen Tiefe erstrecken, die 70 bis 110 Prozent, stärker bevorzugt 90 bis 105 Prozent oder 100 Prozent, der rutschfesten Tiefe oder der maximalen radialen Tiefe der Umfangsrillen (18, 24) entspricht.

15. Reifen, bevorzugt Luftreifen (10), der eine Lauffläche (11) nach wenigstens einem der vorhergehenden Ansprüche aufweist.

## Revendications

1. Bande de roulement destinée à un bandage pneumatique (10), la bande de roulement (11) possédant une nervure circonférentielle centrale (16), deux nervures circonférentielles intermédiaires (14) et deux nervures d'épaulement (12) ; dans laquelle ces cinq nervures (12, 14, 16) sont définies par deux rainures d'épaulement (18) et par deux rainures circonférentielles centrales (24) ; dans laquelle au moins une nervure, plusieurs nervures ou la totalité des nervures en question (12, 14, 16) possède(nt) des lamelles (100) qui s'étendent dans une configuration en zigzag d'une manière telle que les lamelles (100) s'étendent dans la direction axiale à travers la nervure respective (12, 14, 16) et s'étendent également dans une configuration en zigzag d'une manière telle que les lamelles (100) s'étendent dans la direction radiale vers l'intérieur à partir d'une surface externe en direction radiale, de la nervure respective (12, 14, 16) ; **caractérisée en ce que** les deux rainures circonférentielles centrales (24) possèdent chacune une section transversale en forme de dents de scie ou qui possède une configuration en zigzag qui comprend des parois verticales dans la direction radiale et une base plate ; et **en ce que** les deux rainures d'épaulement (18) sont plus larges dans la direction axiale que les deux rainures circonférentielles centrales (24) et chacune possède une section transversale en forme de dents de scie ou qui possède une configuration en zigzag qui comprend des parois en oblique et une base plate.

2. Bande de roulement telle qu'elle est indiquée dans la revendication 1, dans laquelle les lamelles (100) englobent en outre une partie (201) ou une surface la plus interne en direction radiale qui possède une configuration de forme courbe, de forme cylindrique ou en forme de goutte de pluie.

3. Bande de roulement telle qu'elle est indiquée dans la revendication 1 ou 2, dans laquelle lesdites plusieurs nervures (12, 14, 16) englobent une première nervure centrale circonférentielle (16), une deuxième nervure intermédiaire circonférentielle (14), une troisième nervure intermédiaire circonférentielle (14), une quatrième nervure circonférentielle d'épaulement (12) et une cinquième nervure circonférentielle d'épaulement (12).

4. Bande de roulement telle qu'elle est indiquée dans la revendication 3, dans laquelle seules la quatrième et la cinquième nervure (12) possèdent les lamelles (100) ou dans laquelle seule la première nervure (16) possède les lamelles (100).

5. Bande de roulement telle qu'elle est indiquée dans la revendication 3, dans laquelle seules la deuxième et la troisième nervure (14) possèdent les lamelles (100).

6. Bande de roulement telle qu'elle est indiquée dans la revendication 3, dans laquelle seules la première et la cinquième nervure (16, 12), ou seules la première, la quatrième et la cinquième nervure (16, 12) possèdent les lamelles (100).

7. Bande de roulement telle qu'elle est indiquée dans la revendication 3, dans laquelle chacune des nervures parmi la première, la deuxième, la troisième, la quatrième et la cinquième nervure (16, 14, 12) possèdent les lamelles (100).

8. Bande de roulement telle qu'elle est indiquée dans la revendication 3, dans laquelle seules la première et la deuxième nervure (16, 14), ou seules la première, la deuxième et la troisième nervure (16, 14) possèdent les lamelles (100).

9. Bande de roulement telle qu'elle est indiquée dans au moins une des revendications, dans laquelle les lamelles (100) de la quatrième et de la cinquième nervure (12) se terminent dans des encoches (121) ou bien les lamelles (100) dans les nervures d'épaulement de la bande de roulement (11) se terminent dans des encoches (121).

10. Bande de roulement telle qu'elle est indiquée dans au moins une des revendications, dans laquelle les lamelles (100), dans au moins une nervure, dans plusieurs nervures ou dans la totalité des nervures (12, 14, 16) sont inclinées ou possèdent une forme oblique dans une vue de sommet sur la bande de roulement par rapport à la direction axiale, de préférence en formant un angle avec la direction axiale qui se situe dans une plage de -20° à+ 20°.

11. Bande de roulement telle qu'elle est indiquée dans la revendication 10, dans laquelle les lamelles (100) dans une des nervures (12, 14, 16) sont inclinées dans une direction opposée par rapport à la direction axiale que prennent les lamelles (100) dans la nervure ou les nervures adjacente(s) (12, 14, 16).

12. Bande de roulement telle qu'elle est indiquée dans au moins une des revendications, dans laquelle chacune des lamelles (100) s'étend dans la direction axiale complètement à travers la nervure respective (12, 14, 16).

13. Bande de roulement telle qu'elle est indiquée dans au moins une des revendications, dans laquelle la configuration en zigzag d'une lamelle (100) qui s'étend dans la direction axiale comprend de 2 à 6, de préférence de 3 à 5 sommets dans la configuration en zigzag dans la direction axiale, et de 1 à 7, de manière plus préférée de 2 à 5 vallées dans la configuration en zigzag dans la direction axiale ; et/ou dans laquelle la configuration en zigzag d'une lamelle (100) qui s'étend dans la direction radiale comprend de 2 à 5, de préférence 2 ou 3 sommets dans la configuration en zigzag dans la direction radiale, et de 1 à 6, de préférence 2 ou 3 vallées dans la configuration en zigzag dans la direction radiale.

14. Bande de roulement telle qu'elle est indiquée dans au moins une des revendications, dans laquelle les lamelles (100) s'étendent dans la direction radiale à partir de la surface de la bande de roulement (11) la plus externe en direction radiale jusqu'à une profondeur radiale qui représente de 70 à 110 %, de manière plus préférée de 90 à 105 % ou 100 % de la profondeur d'usure ou de la profondeur radiale maximale des rainures circonférentielles (18, 24).

15. Bandage, de préférence bandage pneumatique (10), qui possède une bande de roulement (11) qui correspond à au moins une des revendications précédentes.
